# EUROPEAN PATENT APPLICATION

(11) **EP 1 956 317 A2**
(43) Date of publication of application: **13.08.2008**
(21) Application number: 08250356.6
(22) Date of filing: 30.01.2008
(51) Int. Cl.: F24H 3/04, F24H 9/20

(54) **Heating device and method**

(30) Priority: 30.01.2007 US 669007
(71) Applicant: Master Appliance Corporation, Racine, WI 53401 (US)
(72) Inventor: Radwill, Arthur S., Racine, WI 56402 (US); Monet, Paul L., Brookfield, WI 53045 (US); Naughton, Dan J., Racine, WI 56402 (US); Benedict, Charles J., Gainesboro, TN 35862-5832 (US); Brott, John R., Brookfield, WI 53005 (US)
(74) Representative: Every, David Aidan

(57) **Abstract**

A heating device such as a heat gun or heat unit which includes a surface temperature sensor to measure the surface temperature of the work piece being heated.

## Description

### BACKGROUND

The present invention relates to a heating device and a heating process in general with a particular and specific application as related to a heat gun and to a heat unit and more particularly, to a heating device including a surface temperature sensor.

Heat guns are generally pistol-shaped devices emitting heated air which is blown onto a work surface. Heat guns are in wide use by manufacturers, homeowners, contractors and the like for a variety of purposes, each of which may require a different object temperature. For example, paint stripping may require a very high object temperature while plastic forming will likely require a more moderate temperature.

### SUMMARY

In one embodiment, the invention provides a heat gun for heating a surface of a work piece including a heating element, an air moving device and & non-contact temperature sensor for measuring the surface temperature of the work piece. In another embodiment the invention includes a heating device for heating a surface of a work piece including a housing, a heating element within the housing, an air moving device within the housing, a microprocessor in communication with the heating element and a non-contact temperature sensor in communication with the microprocessor for measuring the surface temperature of the work piece. The invention includes a method for heating a surface of a work piece with a beating device including entering into the heating device a desired temperature of a surface of a work piece, engaging the heating device to blow heated air onto the surface of the work piece and measuring the temperature of the surface of the work piece using a non-contact temperature sensor on the heating device.

Other aspects of the invention will become apparent by consideration of the detailed description and accompanying drawings.

### BRIEF DESCRIPTION OF THE DRAWINGS

Fig. 1 is a perspective view of a heat gun of the present invention.
Fig. 2 is a side view of the heat gun without the housing attached.
Fig. 3 is a sectional view along line 3-3 of Fig. 2.
Fig. 4 is a perspective view of a display screen and user controls.
Fig. 5 is a side view of a surface temperature sensor including visual beam.
Fig. 6(a)- 6(d) are flow charts of menu options.
Fig. 7 is a schematic of the control circuitry.
Fig. 8 is a flow chart of a method of operation of the heat gun.
Fig. 9 is a side view of a mounting mechanism for the heat gun.
Fig. 10 is a perspective view of an alternative embodiment of the heat gun.
Fig, 11 is a perspective view of a second alternative embodiment of the heat gun.
Fig. 12 is a perspective view of an alternative embodiment of the invention showing the heat unit.
Fig. 13 is a side view of a heat gun in conjunction with an RFID tag.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "'comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

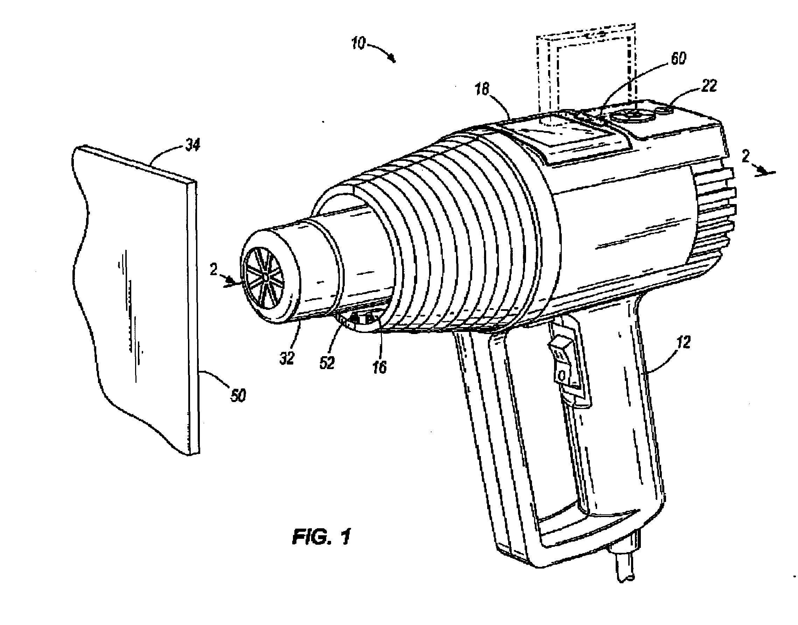

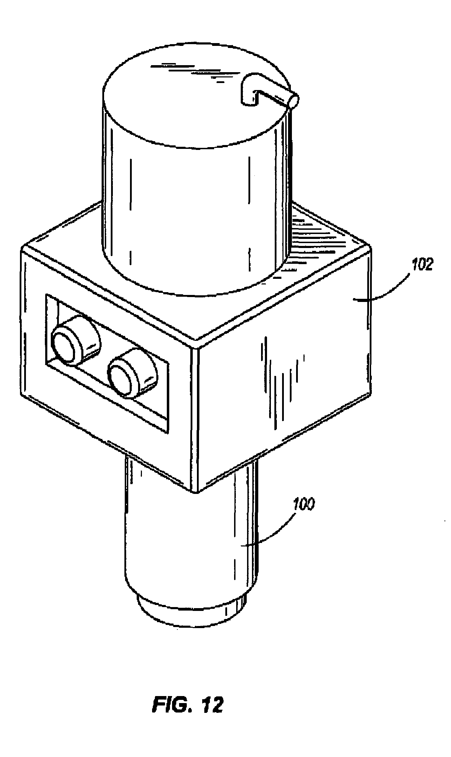

The invention includes a heating device such as the heating gun embodiments of Figs. 1-11 and 13, the heat unit embodiment of Fig. 12.

The invention includes a process whereby the performance of the heating device can be significantly enhanced through, the use of known screen, imaging, and heating technologies used in other industries. Not all materials to be heated respond equally well to a single beating method. Therefore, knowledge about the material being heated, its spatial position, its shape and structure garnered through imaging techniques combined with various known heating techniques can significantly enhance the effectiveness of a heating device. Through the coordinated use of multiplexed, scanned, pulsed and continuous wave multiple contact and non-contact sensors operating both in the mechanical wave and electromagnetic wave domains, in conjunction with software, a spatial, or three-dimensional picture of a work piece can be obtained. In addition, intelligence regarding the composition, mass, emissivity, and other parameters peculiar to the work piece as well as the real-time beat distribution through that work piece can also be obtained. The mechanical wave domain includes, but is not limited to, the generation and detection of ultrasound frequencies while the electromagnetic wave domain includes the spectrum from radio-frequency through x-ray wave generation and detection. This acquired knowledge is used to precisely characterize the work piece such as its spatial location, shape, and material properties while precisely controlling the delivery of heat to the work piece.

As shown in Figs. 1-4, a particular application of the invention includes a beat gun 10 including a housing 12, a heating assembly 14, a surface temperature sensor 16, a display screen 18, user controls 20, and control circuitry 22. The housing 12 encases the heating assembly 14 and insulates it so that a user can safely hold and operate the heat gun 10. The housing 12 is preferably made of a plastic resin material, such as Lexan from General Electric, and manufactured using a process such as injection molding or the like. However, other materials and processes can be used to fabricate the housing 12. The housing 12 is preferably corded such as with cord 24 to draw electricity from a source. However, a battery powered heat gun 10 is also contemplated.

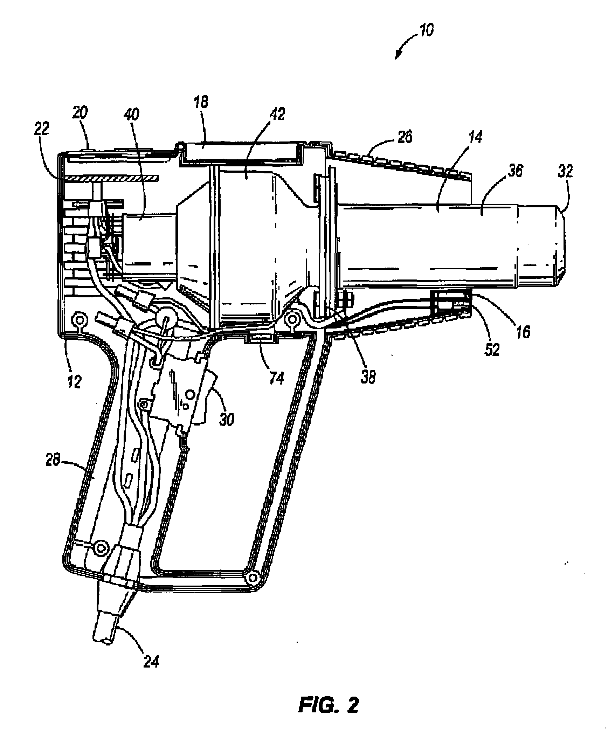

As shown in Fig. 2, the housing 12 includes a barrel portion 26 and handle portion 28. The handle portion 28 includes a trigger 30 to allow for activation of the heat gun 10.
The trigger 30 preferably includes a switch such as a three position rocker switch with a position for off, for fan on and for heat/fan on. However, other switches can also be utilized. The housing 12 is orgonomically designed for ease of use by the user such as shown in Fig. 1. The barrel portion 26 terminates in a nozzle 32 that directs exiting air toward the surface of a work piece 34.

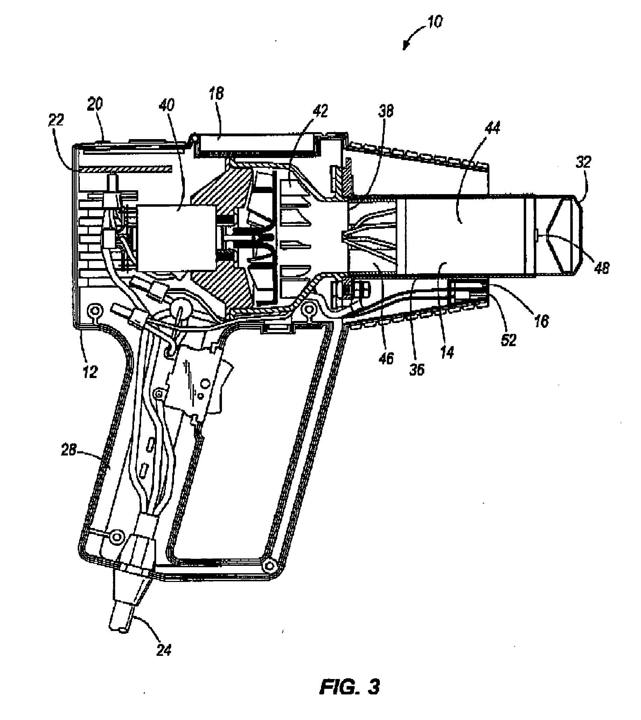

The housing 12 supports the heating assembly 14, the sensor 16, the display screen 18, the user controls 20 and the control circuitry 22 thereon and therein. These components are arranged to allow for efficient operation. Preferably, the components are arranged as set forth in Figs. 2 and 3. The housing 12 has shielding 36 to prevent the heating assembly 14 from affecting the operation of the sensor 16. The shielding 36 preferably includes mica or other type of heat insulator around the heating assembly 14 and includes a barrier 38 holding the heating assembly 14 in place.

Continuing to refer to Figs. 2 and 3, the heating assembly 14 includes an electric motor 40, an air moving device 42 and a heating element 44. The motor 40 powers the air moving device 42 which forces air through a passageway 46. The motor 40 can be a permanent magnet type motor such as model RS360-SH available from Mabuchi Motor Company of Japan or other motor type such as universal or brushless DC. The air moving device 42 can include a fan and typically operates in a speed range of up to 14,000 RPM but can operate at higher speeds if desired.

The heating element 44 can operate in the temperature range of ambient to 1200 degrees F. It should be noted that temperatures above this range can also be achieved as desired. The heating element 44 can be of a resistive type, such as an enclosed ceramic type, which can include a standby heat feature in order to achieve significant reduction in heating time.

In operation, the temperature of the air exiting the nozzle 32 is measured by an exiting air-stream temperature sensor 48 such as a thermocouple or other non-contact sensor such as an infrared sensor. The temperature range of the air exiting the heating gun 10 is generally in the range of ambient temperature to 1200 degrees F, however, higher temperatures can be achieved if desired. While heating up a surface 50 of a work piece 34, it is desirable to know the temperature of the surface 50. Accordingly, the heat gun 10 of the present invention includes the surface temperature sensor 16. Preferably, the sensor 16 is a non-contact sensor such as an infrared surface temperature sensor commercially available and included in units such as from Fluke Corporation of Everett, WA as model 66 IR Thermometer. It should be noted, however, that other types of sensors can be employed to measure surface temperature. The sensor 16 is preferably selected to accommodate the temperature ranges and emissivities of each surface 50 of each work piece 34 that may be worked upon.

The sensor 16 is positioned within the housing 12 as shown in Figs. 2-3. However, it should be noted that other positions can be utilized. The position and shielding 36 cooperate to enable the sensor 16 to be operable without being affected by the temperatures within the housing 12 or other extraneous disturbances. This can also be accomplished through calibration such that the heat flow adjacent the sensor 16 can be compensated for.

In operation, the sensor 16 senses temperatures in a range compatible with that of the heating element 44 and is accurate to within a very small percentage of an actual, desired or preset temperature. This enables a significant increase in the accuracy of the heat gun 1 0 in that typical accuracies of the air temperature reading of the air exiting the heat gun at the nozzle of conventional heat guns are in the range of +/- 10%. With increased sensor accuracy, the importance of the accuracy of the measurement of the temperature of the air exiting the nozzle diminishes.

With respect to calibration of the sensors 16 and 48, calibration can be accomplished in various ways using various conventional methods such as through use of a reference and calibrated thermocouple circuit, through use of self calibration with a learn mode using multiple known surface temperatures, and other such methods.

The accuracy of the temperature readings from the sensor 16 can depend upon the type of surface 50 of the work piece 34. Adjustment of the emissivity constant for a particular surface can be achieved through the use of masking tape having a known emissivity of 0.95, a properly sized deep hole in a material, dull black paint, through the use of an RFID-tag, or by accessing an internally stored copy of standardized and published material emissivity tables.

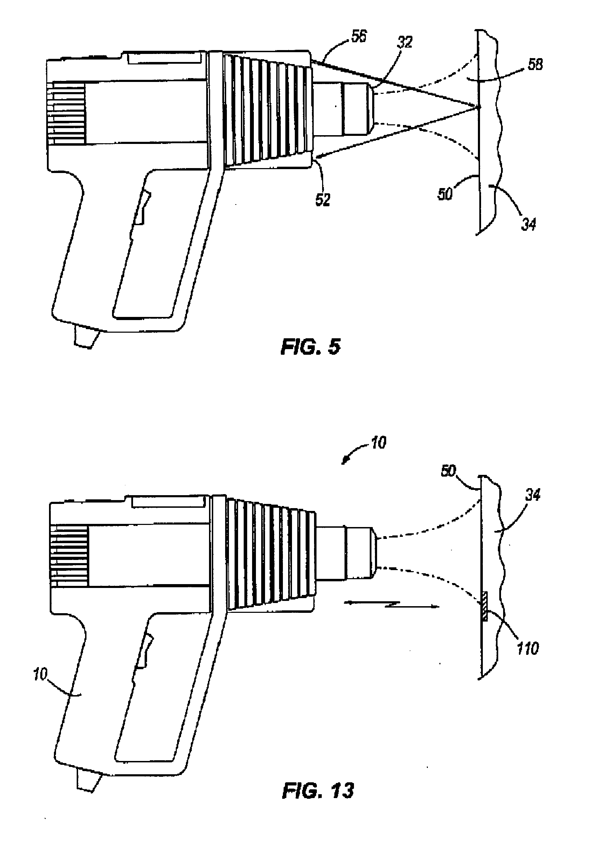

As shown in. Fig. 5, a distance measurement from the nozzle 32 to the surface 50 of the work piece 34 can be obtained through the use of a non-contact distance sensor 52 such as using an ultrasound beam 58 or electromagnetic transducers. In addition, a pointing device such as a visual beam 56 can give a visual indication of the center of the heated air stream contacting the work surface 50. It should be noted that other visual feedback mechanisms for target location can also be utilized. The focus of the ultrasound beam 58 is made to track the visual beam 56 through mechanical coupling. Ultrasound transducers are traditionally made of piezoelectric materials and have been used in such products as cameras made by the Polaroid Corporation and are also widely used in sonar and medical diagnostic imaging equipment. The ultrasound beam 58 can additionally serve as a material identifier by analysis of the reflected and transmitted wave.

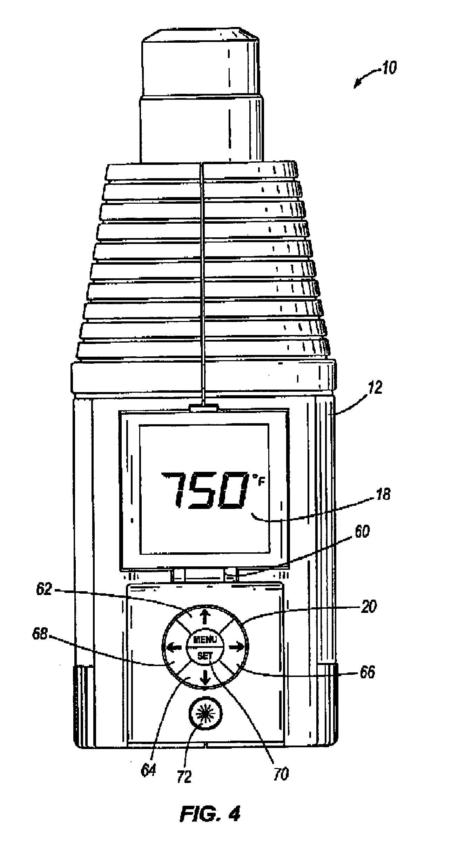

Turning to Figs. 1 and 4, the display screen 18 is preferably an LCD-type screen, however, other types of display screens can be employed. The screen 18 displays the various settings, temperatures and real time operating parameters. The screen 18 is positioned relative to the housing 12 so as to be viewable by the user when the heat gun 10 is held in various positions by the user or when the heat gun 10 is mounted in various positions such as on a work bench. The screen 18 is preferably moveable or repositionable to optimize a user's ability to view the screen 18 while operating the heat gun 10. Such a screen 18 is available from Polytronics, Inc as model PG-120627. The screen 18 is mounted on the housing 12 by a hinge 60 and is repositionable by manual adjustment by the user.

The screen 18 is designed to display information such as desired surface temperature, continuous real time surface temperature, continuous real time exit air temperature, distance from work piece, elapsed time from initiation of heating cycle, indicator of achievement of desired surface temperature, selected program if any, and other like desired information.

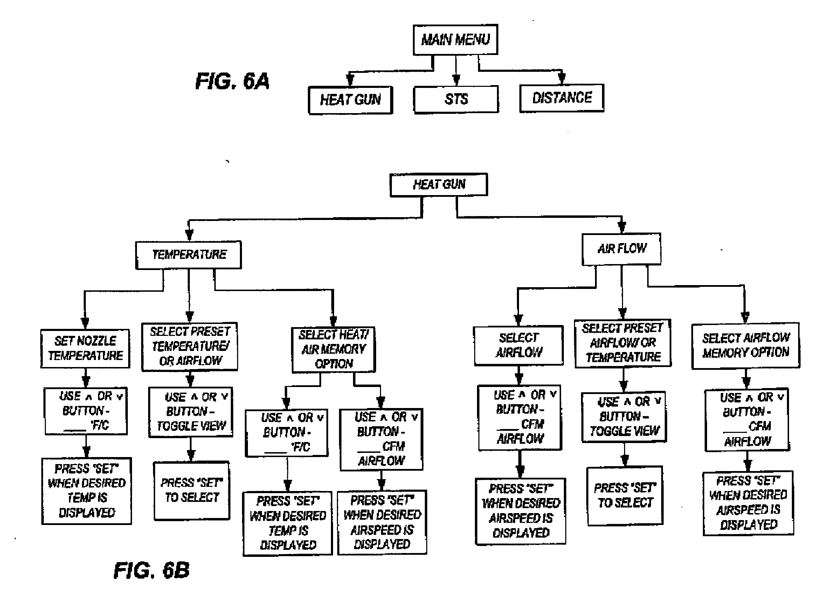

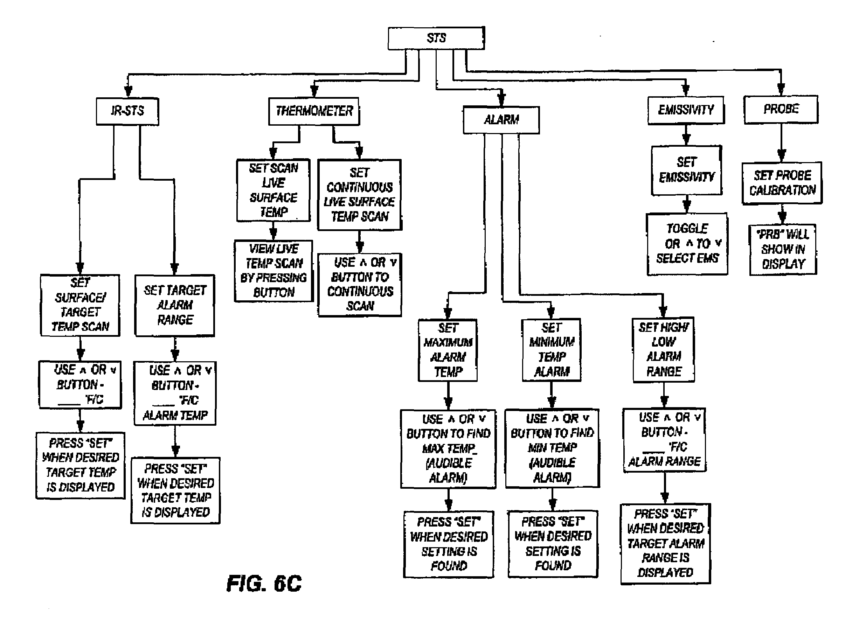

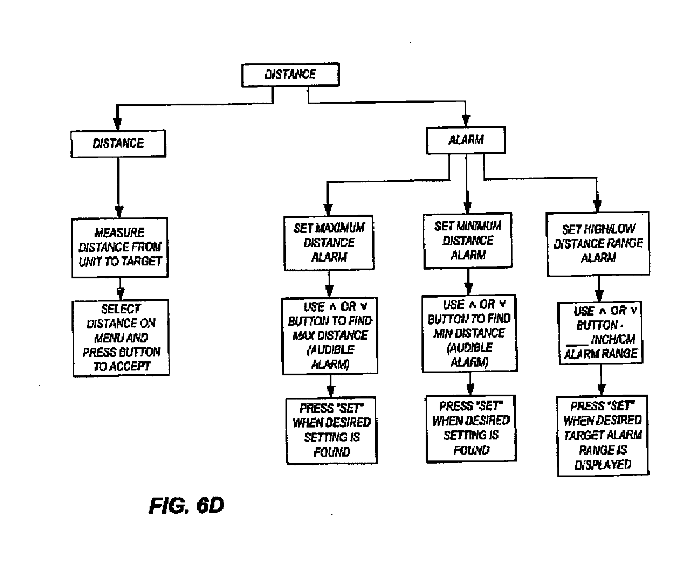

The user controls 20 are positioned relative to the housing 12 for ease of use. The user controls 20 allow the user to enter parameter values and to control the operation of the heat gun 10. The user controls 20 preferably include an up arrow button 62, a down arrow button 64, a right arrow button 66, a left arrow button 68, a menu/set button 70 and an asterisk button 72. It should be noted that many other arrangements and orientation of user controls 20 can be utilized. The menu/set button 70 allows the user to access a. menu, go to the next menu level and enter an option. The up and down arrow buttons 62 and 64 allow the user to scroll through the current menu level. The left arrow button 68 allows the user to go back the previous menu level. The right arrow button 66 allows the user to go forward to the next menu level. The asterisk button 72 initiates a surface temperature scan and the distance scan. See Figs. 6A-6D for details of the menu options. The menu levels are displayed on the display screen 18. When the user is finished setting an option using the user controls 20, the display screen 18 displays ACCEPTED or some other form of acknowledgement. If so programmed, the user controls 20 enable the user to program the heat gun 10 prior to the heat gun 10 discharging air from the nozzle 32 as will be explained in more detail below. This enables the user to program the heat gun 10 without being distracted by or possibly being burned by hot air exiting the heat gun 10. This is a safety interlock arranged through programming of the device. This feature can be defeated if the user wishes so that the user controls 20 remain active at all times.

The user controls 20 allow the user to enter, preset and/or program operating parameters. For example, a user can program a desired surface temperature for the work piece 34, can program how fast the work surface 50 is to be heated, can program how far away the nozzle 32 will be from the work piece 34, and can view the presets and real time operating parameters on the screen 18. The user controls 20 can also be used to select preprogrammed settings for repetitive jobs, for example a heating program for plastics, aluminum, steel, wood or the like. As such, the user has the ability to customize pre-set values and programs for more specific industrial applications.

Alternately, the parameters may be entered into the heat gun 10 remotely through a communication interface 74 that can be either hard-wired or wireless. This interface 74 is useful for remote computer control of the heat gun 10 for use in factory, hazardous or remote areas as well as for remote programming, diagnostics, and statistical data gathering.

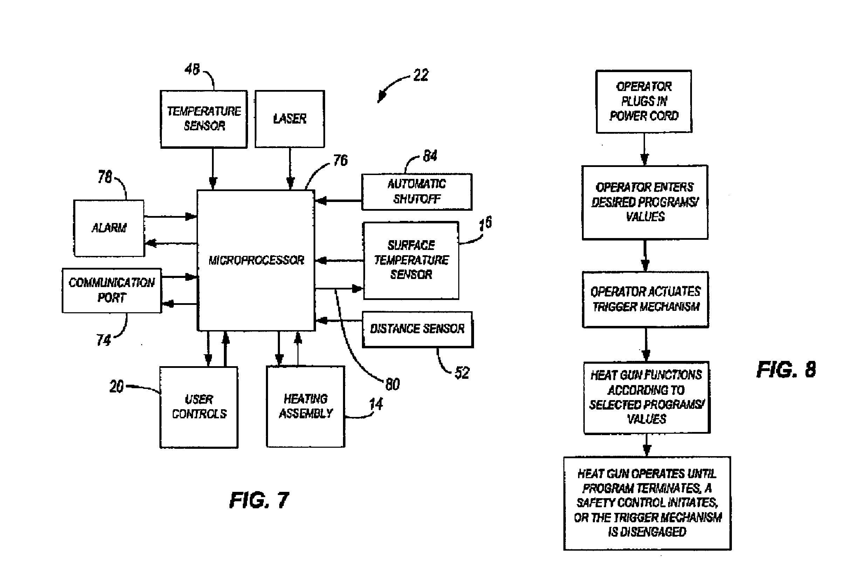

The entered parameters or programs are communicated to the control circuity 22 which controls the heating operation of the heat gun 10 according to the entered parameters or programs. In the absence of entered operating parameters or programs, default settings are employed and can include preset temperature and airflow or last known setting. Referring to Fig. 7, the control circuitry 22 includes a suitable programmed microprocessor 76 such as model 78F9456 available from NEC of Japan and alarms 78 such as visual indicators and/or audible tones. The microprocessor 76 is operationally connected to the user controls 20, the heating assembly 14 and the various sensors 16, 48 and 52 to control the operation of the heat gun 10, as will be explained in more detail below. However, it should be noted that more than one microprocessor 76 could be employed in a distributed intelligence :fashion. Preferably, the microprocessor 76 operates to control the heating assembly 14 using a feedback signal 80 from the sensor 16 such that the sensor's surface temperature readings are utilized to control heating on the work surface 50 as is shown in Fig. 7

The communication interface 74 such as a USB port or similar connection is provided on the housing 12 and is operationally connected to the microprocessor 76 to enable uploading and downloading of information to and from the m.icroprocessor 76. For example, the connection can download operating or diagnostic information, to a computer for analysis or can upload operating programs for user selection or for software revisions. A wireless connection could also be employed for uploading and downloading information.

The integration of the functions of a heat gun and surface temperature sensor into one device enables more precise and efficient heating of the surface 50 of a work piece 34. By displaying and controlling the temperature of and the distance to the work surface 50, the user is better able to perform his/her task. The integration of the distance sensor 52 further enhances the precise and efficient heating of the surface 50 of the work piece 34.

This integration also enables the functionality of multiple tools to be combined into a single tool. The heating function can operate independently of both the surface temperature sensor 16 and distance sensors 52, the surface temperature sensor 16 can operate independently of both the heating and distance functions, and so on. Yet, all the functions can be coordinated to work together. A battery power source can be employed with any of the sensors, allowing for each one to be used without plugging the power cord 24 into a socket.

The integration of the functions of generating heat, measuring distance, and surface temperature sensor into one device also enables increased safety for the user. Specifically, the user can be alerted via the alarm 78, such as an indicator or light, when the desired surface temperature or distance range has been reached or exceeded. The user can be alerted via an alarm 78 when, after reaching the desired surface temperature on the work object 34, the surface temperature decreases such as due to the user significantly increasing the distance from the nozzle 32 to the work surface 50.

With respect to safety, an automatic shutoff 84 can be incorporated as shown in Fig. 7 such as for specific motion, orientation or length of use. The shutoff is designed to include maximum time of use and a sudden angular position shift which translates as acceleration through use of an accelerometer. The shutoff can include an integral accelerometer which senses the force applied to the heat gun 10 along the X, Y, and Z axes (roll, pitch, yaw). Two variables are monitored: time elapsed since last acceleration or movement and magnitude of the last acceleration. If the last movement is within an acceptable and preset window, the elapsed time is monitored. Expiration of the preset acceptable time without any new movement shuts-off power to the heating element 44. Each new movement within the acceptable window resets the timer, even if it has been allowed to expire. If the last movement is outside of the acceptable window, power to the heating element is immediately shut-off, requiring a reset of the microprocessor 76 which can only be obtained by unplugging and plugging in the power cord 24. Power to the motor 40 stays on. This features forces the user to verify that the device did not sustain visually observable catastrophic or hazardous damage.

For safety and for operational efficiency such as in a manufacturing plant, the heat gun 10 preferably includes a lockout or override mode that limits the user's ability to change the operation of the heat gun 10- For example, the lockout mode limits the user's ability to heat up the work surface 50 faster than what is desirable by locking in a specific program into the user controls 20. A specific operating mode, which sets the temperature and airflow, time and distance, can be chosen and if locked, the mode of operation of the heat gun 10 cannot be changed without the proper authorization from, for example, a supervisor. Specifically, the override mode is initialized such as by a supervisor entering a code such as a PIN number. Alternatively, the lockout function can be activated and de-activated through the toggling of a bit in program memory requiring the use of an external device, such as a computer, dongle, or similar devices to change parameters.

Turning now to the operation of the heat gun 10 and Fig. 8, when the user desires to use the heat gun 10, the user plugs the cord 24 into a socket to power the device. Upon power entering the heat gun 1.0, the heat gun 10 does not begin to discharge heated air. Rather, the user is able to enter desired values or programs through the user controls 20. Upon depressing the trigger 30 to the fan on position or the heat/fan on position, the heat gun 10 will begin to function according to the inputted values or programs and will continue until a program terminates, a safety control is initiated or the trigger is switched to the off position.

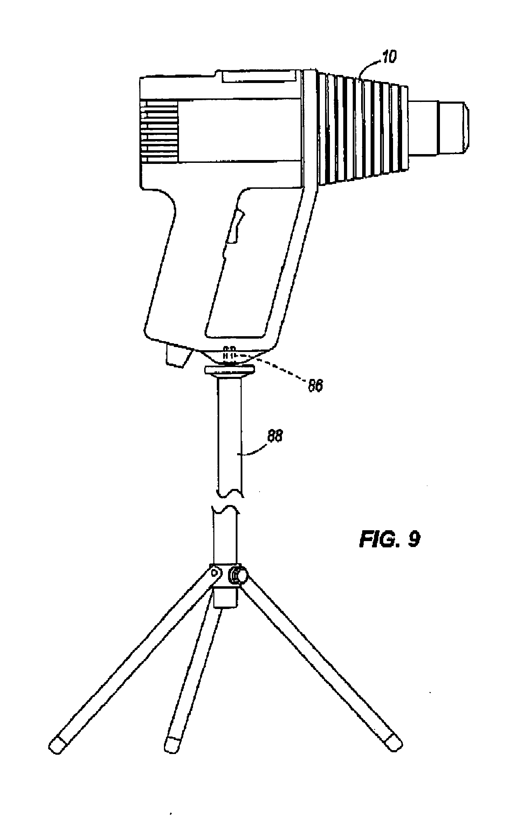

As shown in Fig. 9, the heat gun 10 can include various mounting mechanisms such as a standoff 86 and a tripod 88 or other means of attachments such as to a robotic arm for remote mounting and motion control.

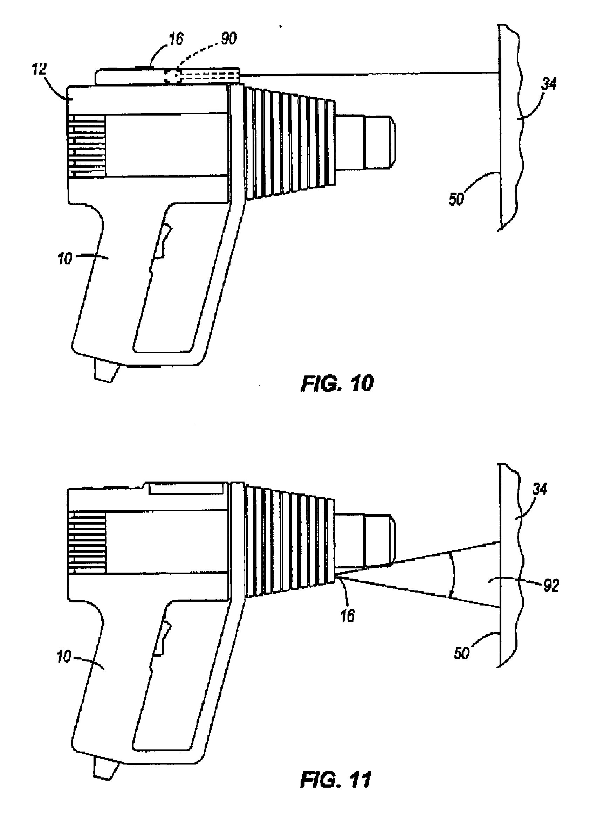

In another embodiment of the invention as shown in Fig. 10, the surface temperature sensor 16 is integrated with respect to the housing 12 so as to be removable from the housing 12 and therefore useable both independently of the heat gun 10 and in combination with the heat gun 10. A battery 90 is utilized in conjunction with the removable sensor 16 as its power source. The distance sensor 52 can be integrated with respect to the housing 12 so as to be removable from the housing 12 and therefore useable both independently of the heat gun 10 and in combination with the beat gun 10. A battery 90 is utilized in conjunction with the removable sensor as its power source.

In another embodiment as is shown in Fig. 11, the position of the surface temperature sensor 16 relative to the housing 12 is moveable as shown by the arrow. This enables more flexibility in heating up different work surfaces 50. For example, the sensor's beam can include a scanning beam 92 to sense the surface temperature of a large work surface 50, The scanning beam 92 consists of an array of sensors multiplexed to the Analog to Digital (A/D) converter of the microprocessor 76.

Turning now to another embodiment of the invention, a heat unit 100 is shown in Fig. 12. The beat unit 100 includes the same elements as the heating gun 10 embodiment described above yet is mountable to a mounting member 102 that can be fixed relative to a work area. The heat unit 100 may or may not include the user controls 20 and may be controllable through the communication interface 74.

As shown in Fig. 13, the invention can also include a process whereby control of the heat gun 10 or heat unit 100 is controlled through the use of a radio frequency identification tag 110. commonly known as an RFID tag. The tag 110 which can be of either an electronic passive or active nature, is embedded into, or affixed to the work piece 34 to be heated. Through an integral or remotely controlled radio frequency transmitter, the heat gun 10 or heat unit 100 interrogates the surface 50 which responds with its encoded characteristics in a fashion similar to that commonly used for inventory tracking in several industries.

The invention also includes the use of a temperature sensitive RFID tag that, when interrogated through a radio frequency link, answers with its serial number and temperature. This temperature, when properly scaled, corresponds to the temperature of the work piece 34 being heated. The temperature can be obtained through various means but as an example, through the well known relationship between resistance and temperature of a common resistor. The resulting change in resistance can be used to modulate the response of the RFID tag 110.

Various features and advantages of the invention are set forth in the following claims.

## Claims

1. A heat gun for heating a surface of a work piece comprising:
a heating element;
an air moving device; and
a non-contact temperature sensor for measuring the surface temperature of the work piece.

2. The heat gun of claim 1 and further including a screen for displaying the surface temperature.

3. The heat gun of claim 2 wherein the screen is a repositionable type LCD screen.

4. The heat gun of claim 1 wherein the heating element includes at a resistive heating element.

5. The heat gun of claim 1 wherein the sensor is of the infrared type.

6. The heat gun of claim 1 and further including a microprocessor and wherein the temperature sensor is in communication with the microprocessor.

7. The heat gun of claim 6 and further including a distance sensor to determine the distance between the heat gun and the work piece, wherein the distance sensor is in communication with the microprocessor.

8. The heat gun of claim 7 and further including a beam that gives a visual indication on the surface of the work piece.

9. The heat gun of claim 1 and further including user controls to enable a user to enter operational parameters into the heat gun.

10. The heat gun of claim 6 and further including a port in communication with the microprocessor to enable uploading and downloading of information to and from the microprocessor.

11. The heat gun of claim 1 and further including an accelerometer to control operation of the heat gun if predetermined forces are exceeded.

12. A heating device for beating a surface of a work piece comprising:
a housing;
a heating element within the housing;
an air moving device within the housing;
a microprocessor in communication with the heating element; and
a non-contact temperature sensor in communication with the microprocessor for measuring the surface temperature of the work piece.

13. The heating device of claim 12 wherein the sensor and the microprocessor form a feedback loop for controlling the operation of the heating element.

14. The heating device of claim 12 and further including a repositionable LCD screen.

15. The heating device of claim 12 wherein the heating element includes at least one of a resistive heating element and a non-resistive heating element.

16. The heating device of claim 12 wherein the non-contact temperature sensor is of the infrared type.

17. The heating device of claim 12 and further including a distance sensor to determine the distance between the housing and the work piece, wherein the distance sensor is in communication with the microprocessor.

18. The heating device of claim 12 and further including user controls to enable a user to enter operational parameters to the heating device.

19. The heating device of claim 12 and further including a port in communication with the microprocessor to enable uploading and downloading of information to and from the microprocessor.

20. A method for heating a surface of a work piece with a heating device, said method comprising:
entering into the heating device a desired temperature of a surface of a work piece;
engaging the heating device to blow heated air onto the surface of the work piece; and
measuring the temperature of the surface of the work piece using a non-contact temperature sensor on the heating device.

21. The method of claim 20 and further including the step of displaying the measured surface temperature on a screen.

22. The method of claim 20 and further including the step of triggering an alarm when the measured temperature of the surface of the work piece equals or exceeds the desired temperature.

23. The method of claim 20 and further including the step of mounting an RFID tag on the work piece.

24. The method of claim 20 wherein the signal from the temperature sensor is fed to a microprocessor in a feedback loop to control the heating device.

25. The method of claim 20 and further including the step of powering up the heating device such that heated air is not blown from the heating device until the desired temperature has been entered and a trigger depressed.

26. The method of claim 20 and further including the step of including a lockout mode on the heating device that limits a user's ability to change desired temperature.
